# EUROPÄISCHE PATENTSCHRIFT

(11) **EP 1 467 910 B1**
(45) Veröffentlichungstag und Bekanntmachung des Hinweises auf die Patenterteilung: **24.05.2006**
(21) Anmeldenummer: 03706234.6
(22) Anmeldetag: 20.01.2003
(51) Int. Cl.: B64C 9/00

(54) **GELENK ZUR VERBINDUNG EINER LÄNGSSEITE MIT EINER OBERSEITE VON BAUTEILEN SOWIE FLEXIBLES BAND ZUR VERWENDUNG FÜR EIN DERARTIGES GELENK**
JOINT FOR CONNECTING A LONGITUDINAL SIDE TO AN UPPER SIDE OF COMPONENTS AND FLEXIBLE STRIP FOR USE IN SUCH A JOINT
ARTICULATION SERVANT A RELIER UN COTE LONGITUDINAL A UN COTE SUPERIEUR DE COMPOSANTS AINSI QU'UNE BANDE FLEXIBLE UTILISEE SUR UNE ARTICULATION DE CE TYPE

(30) Priorität: 22.01.2002 DE 10202440
(43) Veröffentlichungstag der Anmeldung: 20.10.2004
(73) Patentinhaber: Airbus Deutschland GmbH, 21129 Hamburg (DE)
(72) Erfinder: PEREZ-SANCHEZ, Juan, 83620 Feldkirchen-Westerham (DE)
(74) Vertreter: Hansmann, Dierk
(86) Internationale Anmeldenummer: PCT/DE2003/000143
(87) Internationale Veröffentlichungsnummer: WO 2003/062053

(56) Entgegenhaltungen:
- EP-A- 1 085 152
- DE-A- 2 309 567
- DE-C- 4 037 774
- US-A- 4 843 679
- US-A- 5 350 614
- US-A- 5 945 053

## Beschreibung

Die Erfindung betrifft ein Gelenk für eine Bauteil-Anordnung, bei der eine Längsseite eines ersten Bauteils einer Oberseite eines zweiten Bauteils zugewandt ist.

Zur Verbesserung der aerodynamischen Eigenschaften von Flügeln sind aus dem allgemeinen Stand der Technik Konzepte für einen Flügel mit variablem und über Steuermechanismen einstellbarem Profil bekannt. Diese Konzepte verwenden jedoch verhältnismäßig viele bewegliche Teile und Gelenke, die einen hohen Aufwand in Bezug auf ihre Herstellung und Montage bedeuten.

Beispielsweise offenbart die US 4,349,169 einen Tragflügel mit einem mittels eines Stellantriebs veränderlichem Profil. Antriebsstangen des Stellantriebs sind mittels Gelenke mit der Struktur des Tragflügels verbunden, wobei die Achsrichtung der Gelenke in Spannweitenrichtung verläuft. Dadurch ist zwar eine Profilver änderung möglich, wenn in Spannweiten-Richtung gesehen mehrere Stellantriebe mit entsprechenden Betätigungs-Stangen hintereinander angeordnet sind. Die dort offenbarte Profilform-Veränderung erfolgt jedoch bei diesem Gegenstand über die gesamte Spannweiten-Richtung.

Weiterhin ist aus der EP 860 355 ist ein aerodynamisches Bauteil mit veränderbarer Wölbung offenbart, das aus gelenkig gelagerten Rippen mit einem Außengürtel und mehreren an diesem angreifenden längenkonstanten Versteifungsstreben gebildet wird. Die Versteifungsstreben werden zur Verformung des Bauteils mittels Aktuatoren derart betätigt, dass sich die Versteifungsstreben in der Rippen-Längsrichtung oder Strömungsrichtung bewegen.

Aus der DE 28 07 648 C2 ist eine Faltwand mit durch ein Stoffgelenk miteinander verbundenen Wandteilen bekannt. Das Stoffgelenk ist ein Band, das an seinen Längskanten mit einer Randrippe versehen ist. Die Randrippe wird in einer längs der Stirnseite des Wandteils verlaufenden Nut mit einer entsprechenden, gegenüber der Nut breiteren Ausnehmung gehalten.

Ein weiteres Dokument zur Illustration vom Stand der Technik ist die DE-A-2 309 567.

Die Aufgabe der Erfindung ist, ein Gelenk zu schaffen, das einfach gebaut und einfach installierbar ist und eine Alternative zu den heute verwendeten Gelenken darstellt.

Diese Aufgabe wird mit den Merkmalen des unabhängigen Patentanspruchs gelöst. Weitere Ausführungsformen sind in den Unteransprüchen angegeben.

Erfindungsgemäß ist ein Gelenk zur Verbindung einer Längsseite eines ersten Bauteils mit einer Oberseite eines zweiten Bauteils mit zumindest zwei zusammenwirkenden Bändern vorgesehen, die mit ihren ersten Enden E1 jeweils an verschiedenen, entgegengesetzt zueinander liegenden Seiten des ersten Bauteils befestigt sind und die mit ihren zweiten Ende E2 an jeweils einem auf dem zweiten Bauteil angeordneten Spann-Element derart befestigt sind, dass diese im Bereich zwischen den Bauteilen die Längs-Mittelachse des ersten Bauteils in entgegengesetzten Richtungen schneiden, mit einem auf zumindest einem Spann-Element gelegenem Druck-Element zur Lagerung des ersten Bauteils, wobei die Bänder seitlich des Druck-Elementes und in der Achsen-Richtung gesehen zueinander kreuzweise verlaufen. Die Bänder können aus zumindest zwei Lagen eines Faserverbund-Werkstoffs oder eines anderen Kunststoffs oder eines textilen Materials gebildet sein. Die Bänder können in ihrer Längs-Richtung in einem Winkel β zur Achsen-Richtung des Struktur-Gelenks verlaufen, wobei zur Aufnahme von durch das Gelenk zu übertragenden Schub-Kräften der Winkel β ungleich 90 Grad beträgt. Die Bänder können zwischen einem Spann-Element und dem zweiten Bauteil befestigt sein.

Im folgenden wird die Erfindung anhand der beigefügten Figuren beschrieben. Es zeigen:
- Fig. 1: eine schematische perspektivische Darstellung einer Ausführungsform des erfindungsgemäßen Gelenks, in der in einer Pfeil-Darstellung die Kinetik und Kinematik eingetragen ist,
- Fig. 2: die Ausführungsform des Gelenks nach der Fig. 1 im. Schnitt mit einer Pfeil-Darstellung der Kinetik und Kinematik,
- Fig. 3: eine weitere Ausführungsform als eine Variante A des erfindungsgemäßen Gelenks,
- Fig. 4: eine weitere Ausführungsform als eine Variante B des erfindungsgemäßen Gelenks,
- Fig. 5: eine weitere Ausführungsform als eine Variante C des erfindungsgemäßen Gelenks,
- Fig.6a: eine schematische Darstellung des Schubkraft-Verlaufs bei der Verwendung flexiblen Bandes für ein Gelenk, das nicht fixiert, sondern z.B. als Gewebe aufgebaut ist,
- Fig.6b: eine schematische Darstellung des Schubkraft-Verlaufs bei der Verwendung flexiblen Bandes für ein Gelenk, das in einer Matrix, also z.B. in einer Harz-Schicht, fixiert ist.

Für die erfindungsgemäßen Gelenke zur gelenkigen Verbindung zweier zueinander beweglicher Bauteile werden flexible Gelenk-Bänder oder Bänder oder flexible Riemen oder Gürtel-Elemente verwendet, die aus zumindest zwei Schichten oder Lagen eines Materials aufgebaut sind, wobei die Schichten oder Lagen im freien Gelenk-Bereich F miteinander nicht fixiert sind. Als der freie Gelenk-Bereich FG wird nachfolgend derjenige Bereich verstanden, der zwischen den miteinander verbundenen Bauteilen liegt. Der freie Gelenk-Bereich FG ist auch derjenige Bereich der Bänder, an dem die Bänder des Gelenks nicht in jeder der vorgegebenen Stellungen der Bauteile an diesen anliegen. Demgegenüber weist jedes erfindungsgemäß vorgesehenes flexibles Band einen fixierten Bereich B auf, an dem das Band an dem jeweiligen Bauteil befestigt oder mit diesem fest verbunden ist. An diesen Bändern können auch Bereiche enthalten sein, die zwar an dem Bauteil oder den Bauteilen anliegen, die jedoch nicht fixiert oder an diesen befestigt sind.

Das erfindungsgemäße Gelenk ist ein Struktur-Gelenk, da es in seinen Bestandteilen aus Materialien gebildet werden kann, die ähnliche Eigenschaften wie die mit diesem verbundenen Bauteile aufweisen, so dass das Verhalten des Gelenks selbst bei Einwirkung von Kräften bzw. unter Spannungen dem Verhalten der Bauteile entspricht.

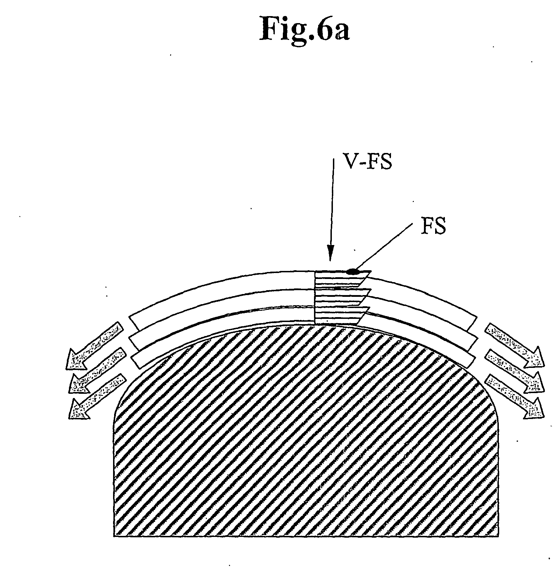

Als Material für die erfindungsgemäß verwendeten Bänder ist insbesondere ein Faserverbund (FV) -Werkstoff oder ein anderer Kunststoff oder ein textiles Material oder Gewebe vorgesehen. Die vorgesehenen Bänder sind aus zumindest zwei Lagen des voranstehend bezeichneten Materials gebildet. Die Lagen sind im Bereich F, also im Bereich zwischen den mit dem Gelenk zu verbindenden Bauteilen T1, T2, nicht aneinander fixiert, um die Schubkräfte FS des sich ergebenden Schubkraft-Verlaufs V-FS möglichst gering zu halten (Figur 6a). Andernfalls würde sich ein ungünstiger Verlauf von Schubkräften FS ergeben (Fig. 6b).

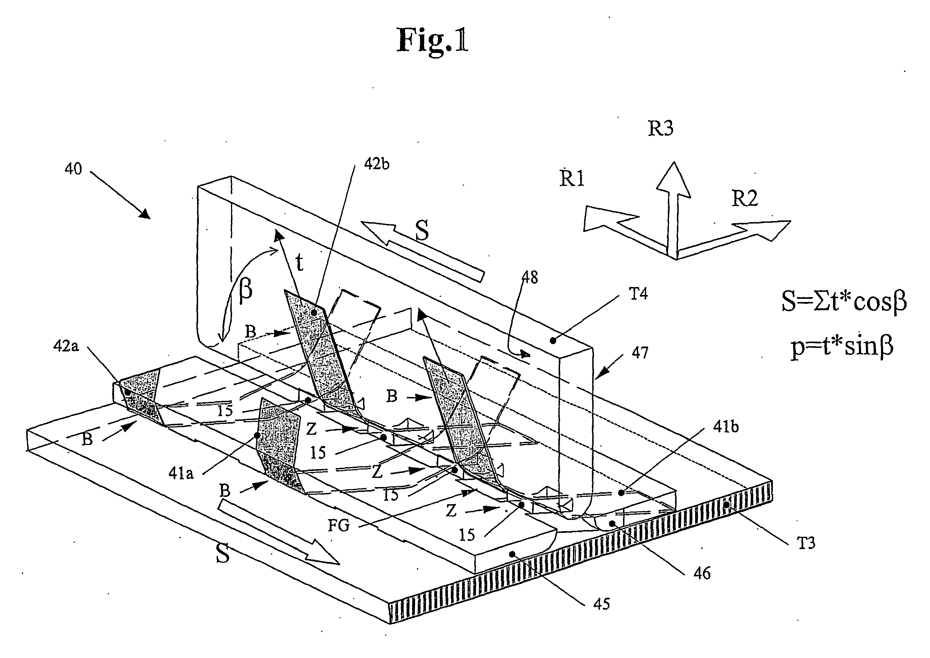

In den Fig. 1 bis 5 ist ein erfindungsgemäßes Struktur-Gelenk oder eine erfindungsgemäße Strukturgelenk-Anordnung zur Verbindung von zumindest zwei Bauteilen T3 und T4, die in einer Neutral-Stellung gezeigt sind. In dieser Stellung bilden die Bauteile eine T-Anordnung. Grundsätzlich können die Bauteile in ihrer Neutral-Stellung eine winklige Anordnung bilden. Die in den Fig. 1 bis 5 dargestellte Gelenk-Verbindung dient zur Verbindung einer Längsseite eines ersten Bauteils T4 mit einer Oberseite eines zweiten Bauteils T3, bei dem zumindest ein zwischen der Längsseite und der Oberseite angeordnetes Druck-Element zur Ausbildung eines freien Gelenk-Bereichs FG und zwei mit diesem zusammenwirkenden flexiblen Bänder verwendet werden.

Erfindungsgemäß ist eine Gelenk-Verbindung zur Verbindung einer Längsseite eines ersten Bauteils T4 mit einer Oberseite eines zweiten Bauteils T3 mit zumindest zwei zusammenwirkenden Bändern vorgesehen, die mit ihren ersten Enden E1 jeweils an verschiedenen, entgegengesetzt zueinander liegenden Seiten des ersten Bauteils T4 befestigt sind und die mit ihren zweiten Enden E2 an jeweils einem auf dem zweiten Bauteil T3 angeordneten Spann-Element derart befestigt sind, dass deren Verläufe in Bezug auf eine Längs-Mittelachse A des ersten Bauteils T4 entgegengesetzt zueinander verlaufen oder diese im Bereich zwischen den Bauteilen die Längs-Mittelachse A des ersten Bauteils in entgegengesetzten Richtungen schneiden oder dass diese im Bereich zwischen den Bauteilen die Längs-Mittelachse A des ersten Bauteils in entgegengesetzten Richtungen schneiden, mit einem auf zumindest einem Spann-Element gelegenen Druck-Element zur Lagerung des ersten Bauteils T3, wobei die Bänder seitlich des Druck-Elementes und in der Achsen-Richtung R1 gesehen zueinander kreuzweise verlaufen. Insbesondere bilden die Bauteile im Zusammenspiel mit dem zumindest ein Druck-Element seitlich neben diesem einen freien Gelenk-Bereich FG oder zwei freie Gelenk-Bereiche aus, in dem bzw. in denen die Bänder jeweils von einem zum anderen Bauteil verlaufen. Die Bänder können dabei auf einer Seite des Druck-Elementes oder jeweils eines auf beiden Seiten desselben angeordnet sein. Vorzugsweise sind zwei Druck-Elemente vorgesehen, um eine stabile Lagerung des betreffenden Bauteils T4 zu erreichen.

Die Bänder können in ihrer Längs-Richtung in einem Winkel β zur Achsen-Richtung R2 des Struktur-Gelenks verlaufen, wobei zur Aufnahme von durch das Gelenk zu übertragenden Schub-Kräften der Winkel β insbesondere ungleich 90 Grad betragen kann.

Das in der Fig. 1 in einer Prinzip-Darstellung gezeigte Gelenk oder die GelenkAnordnung 40 umfasst zwei Anordnungen mit jeweils zwei flexiblen Bändern 41 a, 41 b bzw. 42a, 42b sowie insgesamt drei Druck-Elemente 15, wobei ein Druck-Element zwischen den beiden Anordnungen von Bändern und jeweils ein Druck-Element seitlich der beiden Anordnungen von Bändern. Auf dem Bauteil T3 sind zwei Spann-Elemente 45, 46 in Form von Spann-Platten angeordnet, wobei auf jeder Seite des Bauteils T4 ein Spann-Element 45 oder 46 gelegen ist.

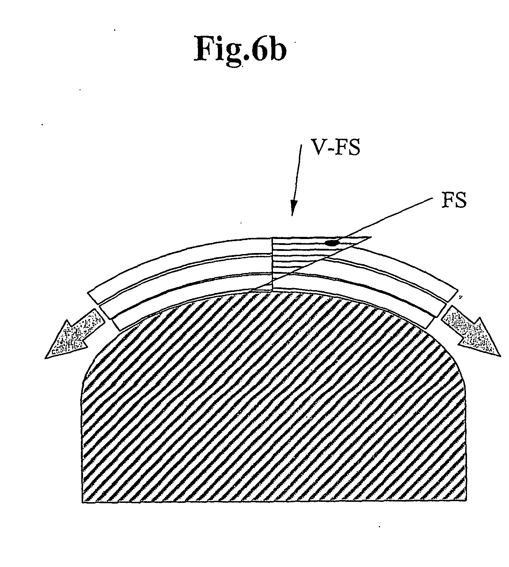

Der Verlauf der Bänder ist in dem dargestellten Ausführungsbeispiel folgenderma-ßen: Jedes flexible Band 41a, 41b bzw. 42a, 42b verläuft von einer ersten Seite des Bauteils T4 - z.B. der Seite 47 - in den Bereich zwischen dem Bauteil T3 und dem Spann-Element, der neben dem Bauteil T4, und zwar auf der entgegengesetzt zur ersten Seite des Bauteils T4 liegenden Seite liegt - also im Beispiel neben der Seite 48. Von dort verläuft das flexible Band an der dem Bauteil T4 abgewandten Seite des Spann-Elements 45 herum auf die freie, dem Bauteil T3 abgewandten Seite des Spann-Elements, wo das Band vorzugsweise befestigt ist. Zu jedem flexiblen Band ist zumindest ein weiteres flexibles Band angeordnet, das entgegengesetzt zum beschriebenen Verlauf vom Bauteil T4 um das Spann-Element gelegt ist. Die Kinematik bei dieser Anordnung in Abhängigkeit der Winkel α und β ist in der Fig. 8 dargestellt. Der Winkel α ist der Winkel, den die Bänder 45, 46 im freien Gelenk-Bereich FG in Bezug auf die Oberfläche des Bauteils T3 einnehmen.

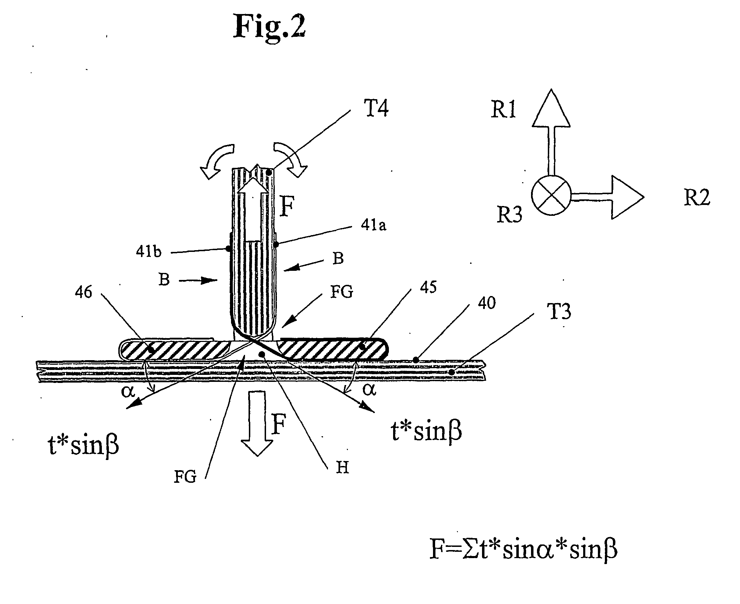

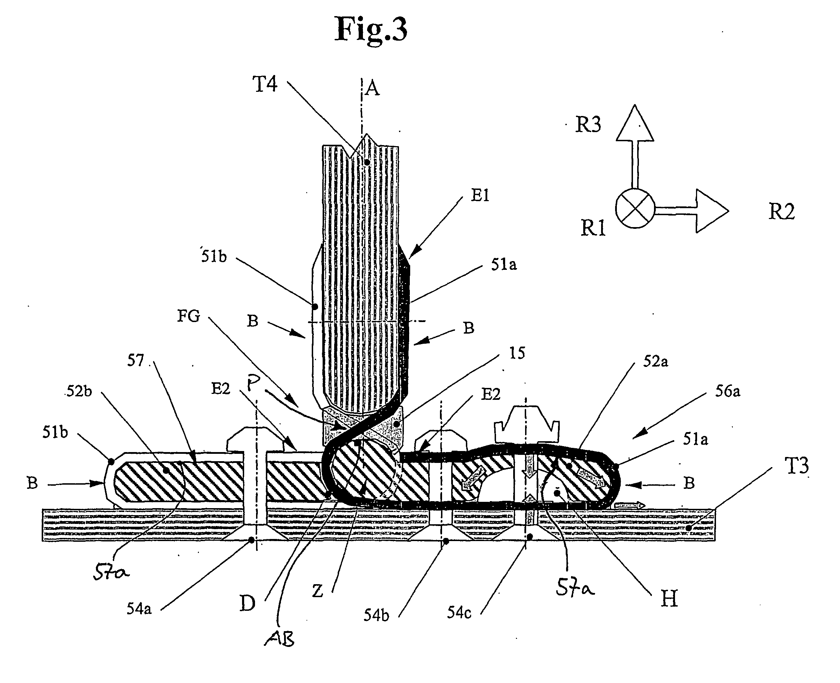

Verschiedene Alternativen für den Verlauf der Bänder und die Lagen der Spann-Elemente relativ zum Bauteil T4 sind in den Fig. 3 bis 5 dargestellt, wobei jeweils nur zwei Bänder gezeigt werden. Grundsätzlich können für das erfindungsgemäße Gelenk zwei oder mehr als zwei Bänder verwendet werden. Die Beschreibung von deren Verlauf wird im wesentlichen an Hand eines der beiden dargestellten Bänder beschrieben. Der Verlauf des zumindest eines weiteren Bandes ergibt sich entsprechend, um einen in den Bändern auftretenden, zueinander entgegengesetzten Kraftfluss - wie er in der Fig. 2 gezeigt ist - zu bewirken.

Das jeweils gezeigte Bauteil T4 ist in seiner Neutral-Stellung mit seiner Quer-Richtung R3 winklig auf die Oberfläche des Bauteils T3 gerichtet. In den Fig. 3 bis 5 ist für diese Neutralstellung beispielhaft ein Winkel von 90 Grad dargestellt. Dabei wird ein erstes Band um ein erstes Spann-Element und ein zweites Band wird um ein zweites Spann-Element vom Bauteil T4 aus gesehen herumgeführt, wobei die Bänder im freien Gelenk-Bereich FG in der Längs-Richtung R1 der Bauteile oder der Achsen-Richtung des Gelenks gesehen hintereinander liegen und ihre Längsrichtungen über Kreuz verlaufen. Erfindungsgemäß sind zumindest zwei zusammenwirkende Bänder verwendet, die mit ihren ersten Enden E1 jeweils an verschiedenen, entgegengesetzt zueinander liegenden Seiten des ersten Bauteils T4 befestigt sind und die jeweils an einem auf einem zweiten Bauteil T3 angeordneten Spann-Element befestigt sind, wobei die Lage der Spann-Elemente eine Befestigung der Bänder auf in Bezug auf eine Mittelachse A des ersten Bauteils T4 zueinander entgegengesetzten Seiten erlauben. Erfindungsgemäß sind also die Verläufe von zumindest zwei Bändern in Bezug auf eine Längs-Mittelachse des ersten Bauteils T4 entgegengesetzt zueinander.

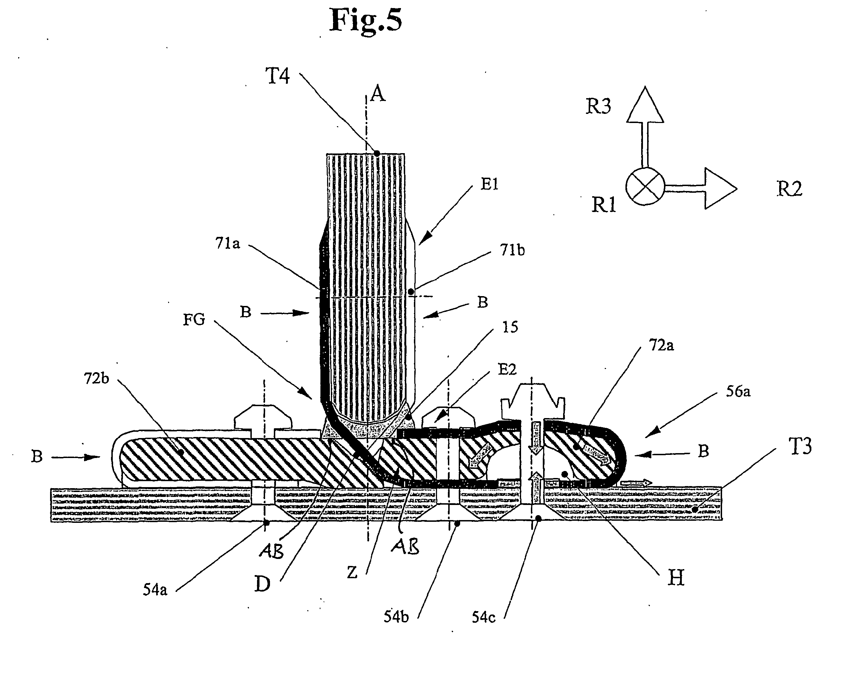

Die Spann-Elemente sind zusammen mit den Bändern vorzugsweise mittels Verbindungs-Elementen am Bauteil T3 befestigt. Ein Druck-Element 15 ist derart auf einem Spann-Element oder auf beiden Spann-Elementen (Figur 5) angeordnet, dass das Bauteil T4 in seinen vorgesehenen Gelenk-Stellungen auf einer entsprechenden Lagerfläche 15a des Druck-Elements 15 gelagert wird. Dazu kann eines oder können beide Spann-Elemente jeweils eine Zunge Z oder einen AuflageBereich AB zur Aufnahme eines Druck-Elementes 15 aufweisen. Ein Auflagebereich AB kann auf einer Zunge Z angeordnet sein. Die Zunge Z eines Spann-Elementes ragt in den Bereich zwischen dem zweiten Bauteil T3 und der diesem zugewandten Seitenfläche des ersten Bauteils T4 hinein. Die in der Achsen-Richtung R2 hintereinander liegenden Zungen von in dieser Richtung aufeinander folgenden Spann-Elemente überlappen sich. Da die Bänder an den diesen zugewandten Flächen der Zungen Z anliegen, werden die Bänder derart geführt, dass sich jeweils nebeneinander liegende Bänder in der Achsen-Richtung R2 gesehen überkreuzen (siehe Fig. 3 bis 5).

In der Ausführungsform nach der Fig. 3 werden die zwei flexiblen, an dem Bauteil T4 befestigten Bänder 51a, 51b verwendet. Beide Spann-Elemente, ragen mit ihren Querschnitten so weit in die Verlängerung des Bauteils T4 in dessen Längs-Richtung R3 herein, dass die vom Bauteil T4 ausgehenden Bänder im freien Gelenk-Bereich nebeneinander gelegen quer zueinander verlaufen. In der Längs-Richtung der Bauteile T3, T4 gesehen ergibt sich ein fiktiver Schnittpunkt P der Bänder. Dieser Punkt P ist der Drehpunkt des Gelenks.

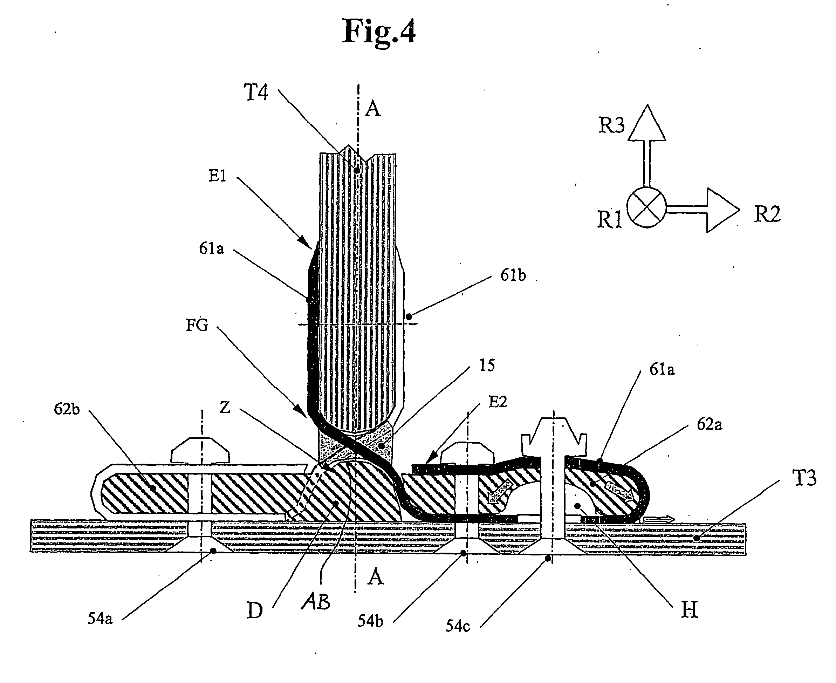

Das jeweilige Band kann ausgehend vom Bauteil T4 nach Durchlaufen des freien Gelenk-Bereichs FG zwischen dem Bauteil T3 und entweder dem ersten Spann-Element 52a (Figur 3) oder dem zweiten Spann-Element 52b (Figur 4) geführt werden, um dann an der freien Oberfläche des betreffenden Spann-Elements 52a bzw. 52b befestigt zu werden. Jedes Band durchläuft ausgehend von einer Seite des Bauteils T4 den freien Gelenk-Bereich FG bis zum Bauteil T3 und kreuzt beim Durchlaufen des freien Gelenk-Bereichs die Längs-Mittelachse A des Bauteils T4. Von dort verläuft das Band um den Querschnitt eines Spann-Elementes herum, und zwar zunächst zwischen die beiden Spann-Elemente hindurch, anschließend zumindest zum Teil in den Bereich zwischen einem der Spann-Elemente und dem Bauteil T3 und vorzugsweise um die freie Außenseite desselben Spann-Elementes herum bis zu einem vorgegebenen Teil der freien Außenseite desselben Spann-Elementes.

Jedes Band wird durch einen von zwei Spann-Elementen freigehaltenen Bereich oder einen Durchlass D hindurch geführt. Die Lage dieses freigehaltenen Bereichs ist entweder im Bereich des Querschnitts der Verlängerung des Bauteils T4 in Richtung auf das Bauteil T3 (Fig. 3 und 4) oder seitlich dieses Bereichs (Fig. 5) gelegen. Dieser Bereich ist jedoch derart gelegen, dass das betreffende Band von einer Seite des Bauteils T4 im freien Gelenk-Bereich FG an dem Drehpunkt P über die Mittelachse des Bauteils T4 geführt werden kann. Von dort verläuft dieses Band entweder in der Richtung, in der es die Mittelachse A kreuzt, zu einem Spann-Element (Fig. 4 und 5), wo es zwischen diesem und dem Bauteil T3 befestigt ist. Alternativ ist das Band auf derjenigen Seite in Bezug auf die Mittelachse A zwischen einem Spann-Element und dem Bauteil T3 befestigt, an der es am Bauteil T4 befestigt ist.

Die Befestigung des betreffenden Bandes an seinem ersten Ende E1 am Bauteil T4 erfolgt auf verschiedene Weise nach dem Stand der Technik. Das Band kann festgeklebt oder mittels Verbindungs-Elementen am Bauteil T4 befestigt sein.

Als Material für die erfindungsgemäß verwendeten Bänder ist insbesondere ein Faserverbund (FV) -Werkstoff oder ein anderer Kunststoff oder ein textiles Material oder Gewebe vorgesehen. Die vorgesehenen Bänder sind aus zumindest zwei Lagen des voranstehend bezeichneten Materials gebildet. Die Lagen sind im Bereich F, also im Bereich zwischen den mit dem Gelenk zu verbindenden Bauteilen T1, T2, nicht aneinander fixiert, um die Schubkräfte FS des sich ergebenden Schubkraft-Verlaufs V-FS möglichst gering zu halten (Fig. 6a). Andernfalls würde sich ein ungünstiger Verlauf von Schubkräften FS ergeben (Fig. 6b).

Die Fixierung oder Befestigung der Bänder an dem Bauteil T3 kann nach dem Stand der Technik erfolgen, also z.B. durch Kleben, durch Befestigungs-Elemente oder durch eine Verschmelzung der Materialien des jeweiligen Bandes mit dem jeweiligen Bauteil.

Vorzugsweise erfolgt die Befestigung der Bänder an ihrem zweiten Ende E2 am jeweiligen Spann-Element mittels Verbiridungs-Elementen. In den Fig. 9 bis 11 ist die an einem ersten Spann-Elementes mittels zumindest eines Verbindungs-Elementes 54a gezeigt, das quer zum Bauteil T3 und dem ersten Spann-Element 52a verläuft und sich durch das Bauteil T3, durch das erste Spann-Element 52a und den zwischen diesen gelegenen Abschnitt des Bandes hindurcherstreckt.

Vorzugsweise ist das betreffende Band um die vom Bauteil T4 abgewandten Randseite 56a des Spann-Elementes 52a herum auf entgegengesetzt zum Bauteil T3 liegenden Außenseite 57a geführt. Das erste Verbindungs-Element 54a erstreckt sich dadurch zum einen durch einen zwischen dem ersten Spann-Element 52a und dem Bauteil T3 gelegenen Bereich des flexiblen Bandes sowie einen auf der Außenseite 57a des Spann-Elements 52a gelegenen Bereich des Bandes hindurch. Dazu ist eine entsprechende Bohrung zur Aufnahme des ersten Verbindungs-Elementes 54a im ersten Spann-Element 52a angeordnet.

Vorzugsweise ist in dem ersten Spann-Element 52a ein Hohlraum H vorgesehen, durch den sich das erste Verbindungs-Element 54a hindurcherstreckt. Der Hohlraum H ist vorteilhafterweise zum Bauteil T3 hin offen. Durch den Hohlraum H wird das erste Spann-Element 52a beim Anziehen des ersten Verbindungs-Elementes 54a in der Quer-Richtung R2 des Spann-Elementes 52a, also in der Längs-Richtung des Bandes verlängert oder gestreckt, um das betreffende Band zu spannen.

Vorteilhafterweise ist ein zweites Verbindungs-Element 54a nahe des freien Gelenk-Bereichs FG oder nahe des Bauteils T4 vorgesehen. Dieses zweite Verbindungs-Element 54a erstreckt sich - wie das erste Verbindungs-Element 54a - durch das Bauteil T3, durch einen zwischen dem ersten Spann-Element 52a und dem Bauteil T3 gelegenen Bereich des flexiblen Bandes, durch das erste Spann-Element 52a sowie durch einen auf der Außenseite 57a des Spann-Elements 52a gelegenen Bereich des Bandes hindurch. Zur Aufnahme des ersten Verbindungs-Elementes 54a ist eine entsprechende Bohrung im ersten Spann-Element 52a angeordnet.

Das zweite Spann-Element 52b ist mittels eines weiteren Verbindungs-Elementes 54c am Bauteil T3 befestigt. Dessen Lage ist relativ zum ersten Spann-Element 52a so vorgesehen, dass das flexible Band zwischen diese hindurchführbar ist. Das zweite Spann-Element 52b kann zusätzlich zur Befestigung eines weiteren flexiblen Bandes 51 b desselben Gelenks vorgesehen sein. Dabei ist dann der Verlauf in Bezug auf die Mittelachse A entgegengesetzt und vorzugsweise symmetrisch zum Verlauf des am ersten Spann-Elements befestigten Bandes.

Erfindungsgemäß sind zumindest zwei in Bezug auf eine Mittelachse A des Bauteils T4 entgegengesetzt verlaufende flexible Bänder angeordnet, wobei die Befestigung der zumindest zwei Bänder an zumindest zwei sich quer zur Längsrichtung der Bauteile T3, T4 erstreckende Spann-Elemente 52a, 52b befestigt sind. Es können zur Befestigung der zumindest zwei Bänder auch mehr als zwei, also z.B. vier Spann-Elemente verwendet werden. Diese sind dann in einer Weise quer zur Längs-Richtung R1 der Bauteile T3, T4 derart versetzt zueinander angeordnet, dass die flexiblen Bänder im freien Gelenk-Bereich FG nebeneinander liegend über Kreuz verlaufend um die Anlageflächen der jeweiligen Spann-Elemente herumgelegt werden können.

In der Figur 4 ist ein alternativer Verlauf eines flexiblen Bandes 61 a nach der Erfindung dargestellt. Das Flexible Band 61a wird an einem ersten Spann-Element 62a befestigt, das in Bezug auf die Mittelachse A des Bauteils T4 auf der gegenüberliegenden Seite angeordnet ist. Dazu ragt das zweite Spann-Element 62b entsprechend weit in die Verlängerung des Querschnittes des Bauteils T4 in Richtung zum Bauteil T3 hinein, um den Schnittpunkt der entsprechenden Verlängerungen der Bänder 61a, 61b in Bauteil-Längsrichtung R1 zu bilden, der vorzugsweise der Drehpunkt P der Bauteile ist.

Bei der Ausführungsform der Fig. 11 mit den Bändern 71a, 71b sind die Spann-Elemente 72a, 72b derart angeordnet, dass der durch diese gebildete Durchlass D im Bereich der Verlängerung des Querschnittes des Bauteils T4 zum Bauteil T3 hin gelegen ist.

Erfindungsgemäß kann auf der dem ersten Bauteil T4 zugewandten Seite des Druck-Elementes ein Auflage-Element angeordnet sein. Dieses Auflage-Element kann eine Gleitschicht aufweisen, die an derjenigen Oberfläche des Auflage-Elementes gelegen ist, die dem ersten Bauteil T4 zugewandt ist. Weiterhin kann die dem ersten Bauteil T4 zugewandte Seite des Auflage-Elementes einen größeren Krümmungsradius aufweisen als die dieser zugewandten Oberfläche des ersten Bauteils T4, um auftretende Druck-Spannungen zu verringern.

## Patentansprüche

1. Gelenk zur Verbindung einer Längsseite eines ersten Bauteils (T4) mit einer Oberseite eines zweiten Bauteils (T3) mit zumindest zwei zusammenwirkenden Bändern (41a, 41b; 42a, 42b; 51a; 51b; 61a, 61 b; 71a, 71b), die mit ihren ersten Enden (E1) jeweils an verschiedenen, entgegengesetzt zueinander liegenden Seiten des ersten Bauteils (T4) befestigt sind und die mit ihren zweiten Enden (E2) an jeweils einem auf dem zweiten Bauteil (T3) angeordneten Spann-Element (45, 46; 52a, 52b, 62a, 62b; 72a, 72b) derart befestigt sind, dass diese im Bereich zwischen den Bauteilen (T3, T4) die Längs-Mittelachse (A) des ersten Bauteils (T4) in entgegengesetzten Richtungen schneiden, mit einem auf zumindest einem Spann-Element gelegenem Druck-Element (15) zur Lagerung des ersten Bauteils (T3), wobei die Bänder seitlich des Druck-Elementes (15) und in der Achsen-Richtung (R1) gesehen zueinander kreuzweise verlaufen und wobei die Bänder (41a, 41b; 42a, 42b; 51a; 51b; 61a, 61b; 71a, 71b) zwischen einem Spann-Element (45, 46; 52a, 52b, 62a, 62b; 72a, 72b) und dem zweiten Bauteil befestigt sind.

2. Gelenk zur Verbindung einer Längsseite eines ersten Bauteils (T4) mit einer Oberseite eines zweiten Bauteils (T3) nach dem Anspruch 1, **dadurch gekennzeichnet, dass** die Bänder (41a, 41b; 42a, 42b; 51a ; 51b; 61a, 61b; 71a, 71b) aus zumindest zwei Lagen eines Faserverbund-Werkstoffs oder eines anderen Kunststoffs oder eines textilen Materials gebildet sind.

3. Gelenk zur Verbindung einer Längsseite eines ersten Bauteils (T4) mit einer Oberseite eines zweiten Bauteils (T3) nach dem Anspruch 1 oder 2, ***dadurch gekennzeichnet,* dass** die Bänder (41a, 41b; 42a, 42b; 51a; 51b; 61a, 61b; 71a, 71b) in ihrer Längs-Richtung in einem Winkel β zur Achsen-Richtung (R2) des Struktur-Gelenks verläuft, wobei zur Aufnahme von durch das Gelenk zu übertragenden Schub-Kräften der Winkel β ungleich 90 Grad beträgt.

4. Gelenk zur Verbindung einer Längsseite eines ersten Bauteils (T4) mit einer Oberseite eines zweiten Bauteils (T3) nach einem der voranstehenden Ansprüche, **dadurch gekennzeichnet, dass** die Bänder (41a, 41 b; 42a, 42b; 51a; 51 b; 61a, 61b; 71a, 71b) jeweils durch den Bereich zwischen einem Spann-Element (45, 46; 52a, 52b, 62a, 62b; 72a, 72b) und dem zweiten Bauteil hindurch bis auf die entgegengesetzt zu diesem Bereich gelegene Oberfläche des Spann-Elements geführt ist und die Bänder mittels eines Verbindungs-Elementes (54a, 54c) befestigt ist, dass das zweite Bauteil, das Spann-Element und einen zwischen dem Spann-Element und dem zweiten Bauteil sowie einen auf dem zweiten Bauteil gelegenen Bereich des jeweiligen Bandes durchragt.

5. Gelenk zur Verbindung einer Längsseite eines ersten Bauteils. (T4) mit einer Oberseite eines zweiten Bauteils (T3) nach einem der voranstehenden Ansprüche, **dadurch gekennzeichnet, dass** einen Hohlraum (H) aufweist, der mittels eines Spann-Elementes (45, 46; 52a, 52b, 62a, 62b; 72a, 72b) verformbar ist*,* um die in Längs-Richtung des jeweiligen Bandes verlaufende Erstreckung des Spann-Elementes zur Spannung des Bandes zu verändern.

6. Gelenk zur Verbindung einer Längsseite eines ersten Bauteils (T4) mit einer Oberseite eines zweiten Bauteils (T3) nach einem der voranstehenden Ansprüche, **dadurch gekennzeichnet, dass** die Bänder (41a, 41b; 42a, 42b; 51a; 51b; 61a, 61b; 71a, 71b) in der Achsen-Richtung gesehen hintereinander angeordnet sind.

7. Gelenk zur Verbindung einer Längsseite eines ersten Bauteils (T4) mit einer Oberseite eines zweiten Bauteils (T3) nach einem der voranstehenden Ansprüche, **dadurch gekennzeichnet, dass** auf der dem ersten Bauteil (T4) zugewandten Seite des Druck-Elementes (15) ein Auflage-Element angeordnet ist.

8. Gelenk zur Verbindung einer Längsseite eines ersten Bauteils (T4) mit einer Oberseite eines zweiten Bauteils (T3) nach dem Anspruch 7, **dadurch gekennzeichnet, dass** das Auflage-Element eine Gleitschicht aufweist, die an derjenigen Oberfläche des Auflage-Elementes gelegen ist, die dem ersten Bauteil (T4) zugewandt ist.

9. Gelenk zur Verbindung einer Längsseite eines ersten Bauteils (T4) mit einer Oberseite eines zweiten Bauteils (T3) nach einem der Ansprüche 7 oder 8, **dadurch gekennzeichnet, dass** die dem ersten Bauteil (T4) zugewandte Seite des Auflage-Elementes einen größeren Krümmungsradius aufweist als die dieser zugewandten Oberfläche des ersten Bauteils (T4), um auftretende Druck-Spannungen zu verringern.

## Claims

1. Joint for connecting a longitudinal face of a first component (T4) to a top face of a second component (T3), with at least two co-operating belts (41a, 41b; 42a, 42b; 51a, 51b; 61a, 61b; 71a, 71b) which are secured by their first ends (E1) to respective different, oppositely lying faces of the first component (T4) and which are secured by their second ends (E2) to a respective clamping element (45, 46; 52a, 52b, 62a, 62b; 72a, 72b) disposed on the second component (T3) so that they intersect the longitudinal mid-axis (A) of the first component (T4) in opposite directions in the region between the components (T3, T4), with a pressure element (15) placed against at least one clamping element to provide support for the first component (T3), which belts extend at the side of the pressure element (15) and cross one another as viewed in the axial direction (R1), and the belts (41a, 41b; 42a, 42b; 51a; 51b; 61a, 61b; 71a, 71b) are secured between a clamping element (45, 46; 52a, 52b, 62a, 62b; 72a, 72b) and the second component.

2. Joint for connecting a longitudinal face of a first component (T4) to a top face of a second component (T3) as claimed in claim 1, **characterised in that** the belts (41a, 41b; 42a, 42b; 51a; 51b; 61a, 61b; 71a, 71b) are made from at least two layers of a fibre-reinforced composite material or another synthetic material or a textile material.

3. Joint for connecting a longitudinal face of a first component (T4) to a top face of a second component (T3) as claimed in claim 1 or 2, **characterised in that** the belts (41a, 41b; 42a, 42b; 51a; 51b; 61a, 61b; 71a, 71b) extend at an angle β with respect to the axial direction (R2) of the structure-joint in their longitudinal direction and in order to absorb thrust forces transmitted by the joint, the angle β is not 90 degrees.

4. Joint for connecting a longitudinal face of a first component (T4) to a top face of a second component (T3) as claimed in one of the preceding claims, **characterised in that** the belts (41a, 41b; 42a, 42b; 51a; 51b; 61a, 61b; 71a, 71b) run respectively through the region between a clamping element (45, 46; 52a, 52b, 62a,62b; 72a, 72b) and the second component as far as the surface of the clamping element disposed opposite this region and the belts are secured by means of a connecting element (54a, 54c), and the second component extends through the clamping element and a region of the respective belt disposed between the clamping element and the second component, as well as a region disposed on the second component.

5. Joint for connecting a longitudinal face of a first component (T4) to a top face of a second component (T3) as claimed in one of the preceding claims, **characterised in that** it has a cavity (H) which can be deformed by means of a clamping element (45, 46; 52a, 52b, 62a, 62b; 72a, 72b) in order to vary the extension of the clamping element in the longitudinal direction of the respective belt in order to tension the belt.

6. Joint for connecting a longitudinal face of a first component (T4) to a top face of a second component (T3) as claimed in one of the preceding claims, **characterised in that** the belts (41a, 41b; 42a, 42b; 51a; 51b; 61a, 61b; 71a, 71b) are disposed one behind the other as viewed in the axial direction.

7. Joint for connecting a longitudinal face of a first component (T4) to a top face of a second component (T3) as claimed in one of the preceding claims, **characterised in that** a contact element is disposed on the face of the pressure element (15) facing the first component (T4).

8. Joint for connecting a longitudinal face of a first component (T4) to a top face of a second component (T3) as claimed in claim 7, **characterised in that** the contact element has an anti-friction layer disposed on the surface of the contact element facing the first component (T4).

9. Joint for connecting a longitudinal face of a first component (T4) to a top face of a second component (T3) as claimed in one of claims 7 or 8, **characterised in that** the face of the contact element facing the first component (T4) has a bigger radius of curvature than the surface of the first component (T4) facing it in order to reduce resultant pressure stresses.

## Revendications

1. Articulation pour relier un côté longitudinal d'un premier composant (T4) à un côté supérieur d'un second composant (T3) au moyen de deux bandes coopérant entre elles (41a, 41b ; 42a, 42b ; 51a, 51b ; 61a, 61b ; 71a, 71b), qui par leurs premières extrémités (E1) sont reliées respectivement à des côtés différents opposés les uns aux autres du premier composant (T4), tandis que par leurs secondes extrémités (E2) elles sont fixées respectivement à un élément de tension (45, 46 ; 52a, 52b ; 62a, 62b ; 72a, 72b) monté sur le second composant (T3) de manière que ces bandes dans la zone située entre les composants (T3 et T4) coupent l'axe longitudinal médian (A) du premier composant (T4) dans des directions opposées, avec un élément de pression (15) situé sur au moins un élément de tension pour servir de palier au premier composant (T4), les bandes étant disposées latéralement à l'élément de pression (15) et se croisant quand on les observe dans la direction axiale (R1), les bandes (41a, 41b ; 42a, 42b ; 51a, 51b ; 61a, 61b ; 71a, 71b) étant fixées entre un élément de tension (45, 46 ; 52a, 52b ; 62a, 62b ; 72a, 72b) et le second élément.

2. Articulation pour relier un côté longitudinal d'un premier composant (T4) à un côté supérieur d'un second composant (T3) selon la revendication 1, **caractérisée en ce que** les bandes (41a, 41b ; 42a, 42b ; 51a, 51b ; 61a, 61b ; 71a, 71b) sont composées d'au moins deux couches d'un matériau renforcé par des fibres ou d'une autre matière plastique ou d'un matériau textile.

3. Articulation pour relier un côté longitudinal d'un premier composant (T4) à un côté supérieur d'un second composant (T3) selon la revendication 1 ou 2, **caractérisée en ce que** les bandes (41a, 41b ; 42a, 42b ; 51a, 51b ; 61a, 61b ; 71a, 71b) ont leurs directions longitudinales qui font un angle β avec la direction (R2) de l'axe de l'articulation de la structure, et pour prendre en charge les efforts de cisaillement à transmettre par l'articulation, cet angle β est différent de 90°.

4. Articulation pour relier un côté longitudinal d'un premier composant (T4) à un côté supérieur d'un second composant (T3) selon une des revendications précédentes, **caractérisée en ce que** les bandes (41 a, 41b ; 42a, 42b ; 51a, 51b ; 61a, 61b ; 71a, 71b) traversent la zone comprise entre un élément de tension (45, 46 ; 52a, 52b ; 62a, 62b ; 72a, 72b) et le second composant, pour aller jusque sur la face supérieure de l'élément de tension qui est à l'opposé de cette zone, et ces bandes sont fixées par un élément de liaison (54a, 54c), le second composant s'étendant sur l'élément de tension ainsi que sur la zone de la bande située entre cet élément et lui-même, et sur une zone située sur lui-même.

5. Articulation pour relier un côté longitudinal d'un premier composant (T4) à un côté supérieur d'un second composant (T3) selon une des revendications précédentes, **caractérisée en ce qu'**elle présente un volume creux (H) qui peut être, par l'intermédiaire d'un élément de tension (45, 46 ; 52a, 52b ; 62a, 62b ; 72a, 72b), déformé de manière à faire varier la couverture selon la direction longitudinale de chaque bande par l'élément de tension servant à tendre la bande.

6. Articulation pour relier un côté longitudinal d'un premier composant (T4) à un côté supérieur d'un second composant (T3) selon une des revendications précédentes, **caractérisée en ce que** les bandes (41a, 41b ; 42a, 42b ; 51a, 51b ; 61a, 61b ; 71a, 71b), observées en direction de l'axe sont disposées les unes derrière les autres.

7. Articulation pour relier un côté longitudinal d'un premier composant (T4) à un côté supérieur d'un second composant (T3) selon une des revendications précédentes, **caractérisée en ce qu'**un élément d'appui est monté sur le côté de l'élément de pression (15) en regard du premier composant (T4).

8. Articulation pour relier un côté longitudinal d'un premier composant (T4) à un côté supérieur d'un second composant (T3) selon une des revendications précédentes, **caractérisée en ce que** l'élément d'appui présente une couche de glissement sur la face supérieure de cet élément qui est située du côté du premier composant (T4).

9. Articulation pour relier un côté longitudinal d'un premier composant (T4) à un côté supérieur d'un second composant (T3) selon une des revendications précédentes, **caractérisée en ce que** le côté de l'élément d'appui situé en regard du premier composant (T4) présente une courbure supérieure à celle de la surface du premier composant (T4) situé en regard de cet élément, de manière à réduire les tensions de pression qui apparaissent.
